# EUROPEAN PATENT APPLICATION

(11) **EP 2 111 942 A1**
(43) Date of publication of application: **28.10.2009**
(21) Application number: 08703085.4
(22) Date of filing: 04.01.2008
(51) Int. Cl.: B23K 9/23, B23K 31/00, B23K 35/30, B23K 103/04

(54) **MULTIPASS BUTT-WELDED JOINT HAVING EXCELLENT BRITTLE CRACK PROPAGATION RESISTANCE, AND WELDED STRUCTURE**

(30) Priority: 05.01.2007 JP 2007000446; 05.01.2007 JP 2007000507; 05.01.2007 JP 2007000605; 27.12.2007 JP 2007336422
(71) Applicant: Nippon Steel Corporation, Tokyo 100-8071 (JP)
(72) Inventor: ISHIKAWA, Tadashi, Chiyoda-ku Tokyo 100-8071 (JP); INOUE, Takehiro, Chiyoda-ku Tokyo 100-8071 (JP); HASHIBA, Yuuji, Chiyoda-ku Tokyo 100-8071 (JP)
(74) Representative: Vossius & Partner
(86) International application number: PCT/JP2008/050221
(87) International publication number: WO 2008/082015

(57) **Abstract**

A multi-pass butt welded joint having excellent brittle crack propagation resistance comprising a multi-pass butt welded joint of steel plates **characterized in that** one or, separated from each other, more of either a weld layer and weld pass part with material characteristics differing from material characteristics of the surroundings and having a function of arresting propagation of a brittle crack are present between a front surface weld layer and a back surface weld layer.

## Description

### TECHNICAL FIELD

The present invention relates to a multi-pass butt-welded joint having an excellent property of arresting propagation of any brittle crack occurring inside the welded joint, that is, brittle crack propagation resistance, and a welded structure having that welded joint.

### BACKGROUND ART

When welding together steel plates to construct a welded structure, to reduce the construction costs or improve the welding work efficiency, usually the large heat input welding method is used, but in a welded joint formed by the large heat input welding method, the weld heat affected zone (hereinafter sometimes referred to as the "HAZ") falls in toughness. Further, the HAZ increases in width and the fracture toughness value Kc (indicator relating to brittle fracture) also falls.

In fracture of a welded joint, stress concentrates at a flaw formed at the time of welding, a crack forms starting from the flaw, and this crack propagates inside the joint. If the welded joint is low in fracture toughness value Kc, a crack easily forms and the crack propagates fast, so the welded joint suddenly fractures. That is, a welded joint fractures by brittle fracture.

To prevent brittle fracture of a welded joint, it is necessary to (i) inhibit the formation of cracks and (ii) arrest the propagation of cracks.

For this reason, up to now, various welding methods securing toughness in the weld zone have been proposed.

For example, while a welding method for thick large sized welded steel pipe, a welding method of an X-groove which welds the initial layer by MIG welding, then welds the front layer and back layer by submerged arc welding to thereby weld the plate thickness as a whole has been proposed (see Japanese Patent Publication (A) No. 53-130242).

This welding method uses welding wire with a larger amount of Ni than the welding wire used in submerged arc welding at the time of MIG welding, secures toughness of the same extent as a submerged weld zone in the initial layer weld zone where weld cracks easily occur and toughness is difficult to secure, and levels the distribution of toughness in the plate thickness direction of the weld zone, but due to this there is there difficult point that it is necessary to use expensive welding wire containing a large amount of Ni at the MIG weld zone.

Therefore, the applicant discovered a technique for sufficiently raising the fracture toughness value Kc from the standpoint of the above (i), proposed a large heat input butt welded joint having excellent brittle fracture resistance (see Japanese Patent Publication (A) No. 2005-144552 and Japanese Patent Publication (A) No. 2006-088184) and, further, proposed a verification method for suitably verifying the brittle fracture resistance of the large heat input butt welded joint based on the fracture toughness value Kc (see Japanese Patent Publication (A) No. 2006-088184).

The welded joint proposed by the applicant is useful in the point that it is resistant to brittle fracture and can raise the safety of a welded structure. Further, the above verification method is useful in designing a welded joint resistant to brittle fracture.

However, even in a welded joint designed so that no cracks occur in an ordinary stress load environment, it sometimes receives sudden or impact-like stress or irregular, complicated stress resulting in cracks.

In the past, in a butt welded joint of TMCP steel plates having a plate thickness of 25 mm or so, any brittle crack is deflected to the base material side due to the action of residual stress inside the welded joint, so it was believed that if raising the brittle crack propagation resistance of the base material, it would be possible to guide any brittle crack occurring inside the welded joint to the base material to arrest it.

For example, to lower the residual stress in the weld zone as a whole, the welding method of partially using a welding material with a low transformation temperature containing a large amount (for example 11%) of Ni and utilizing a welding pass for martensite transformation from austenite has been proposed (see Japanese Patent Publication (A) No. 2000-033480). However, the weld zone resulting from this welding method has a structure of a martensite structure, so is extremely high in strength. Ultimately, even if a weld zone containing a large number of Ni, it often is lower in toughness than surrounding weld zones not containing Ni.

Further, in recent years, along with the increasingly larger size of welded structures and simplification of structures, it has become possible to set the design stress higher, so in the case of the high strength thick-gauge steel plates now starting to be used, any brittle crack occurring at a butt welded joint, depending on the extent of the fracture resistance value of the welded joint, is not deflected to the base material side, but is propagated along the HAZ. This fact was learned as a result of fracture tests of the inventors (see Abstract of Papers at Welded Structure Symposium 2006, p. 195 to 202).

Further, the inventors learned that in the case of steel plates of a plate thickness of, for example, 70 mm or more, a welded joint is formed with a large distribution of toughness in the plate thickness direction and that even if for example a reinforcement plate is fillet welded crossing the welded joint, any brittle crack will not be caught by the reinforcement plate, but will propagate along the weld metal part or HAZ and the welded joint will fracture.

Therefore, based on the judged facts, the inventors proposed a welded joint and welding method having excellent brittle crack propagation arrest performance comprising removing part or all of a region where a butt welded joint of a vertical member and a fillet welded joint of a horizontal member cross, using repair welding to form weld metal having excellent toughness containing Ni in a content of 2.5 mass% or more having compressive residual stress (see Japanese Patent Publication (A) No. 2005-111520) or weld material having excellent fracture toughness having an arrest performance (K_{Ca} value) of 2000N/mm^{1.5} or more (see Japanese Patent Publication (A) No. 2006-075874), deflecting a direction of crack propagation to the high toughness or high arrest performance weld metal surroundings even when a brittle crack is propagated along the longitudinal direction of the butt weld zone of the vertical member, and arresting crack propagation at the base material part of the horizontal member.

These methods deflect a crack propagating along an FL (boundary between weld metal and base material heat affected zone) mainly in a single pass large heat input butt welded joint to the high arrest performance steel plate side to arrest it in the base material and thereby improve the safety of the butt welded joint.

However, the inventors confirmed from the results of large-scale fracture tests of multi-pass butt welded joints that in multi-pass butt welded joints, cracks propagate inside the weld metal, so even if applying a method effective in conventional single pass large heat input butt welded joints, a sufficient effect cannot be obtained in multi-pass butt welded joints.

For this reason, technology is required for reliably arresting a brittle crack formed at a multi-pass butt welded joint of steel plate having a plate thickness of 50 mm or more.

### DISCLOSURE OF THE INVENTION

The present invention has as its object to form a welded joint having an excellent characteristic of making propagation of a brittle crack in a longitudinal direction of a welded joint difficult and arresting it even if propagating, that is, brittle crack propagation resistance, even if a brittle crack occurs in a welded joint when butt welding steel plates, in particular steel plates having a plate thickness of 50 mm or more. Further, the present invention has as its object to solve the above problem and provide a welded joint having an excellent brittle crack propagation resistance and a welded structure having the welded joint.

The inventors, based on these determined facts, engaged in in-depth research on techniques for solving the above problems. As a result, they discovered that (w) if arranging one or more weld layers or weld pass parts having characteristics different from the surrounding material characteristics, separated from each other, between a front surface weld layer and a back surface weld layer of the multi-pass welded joint to split or partially split the distribution of toughness in the plate thickness direction of the welded joint, even if a brittle crack occurs inside the welded joint, it is possible to arrest the propagation in the longitudinal direction of the welded joint.

Specifically, they discovered the following:
(x) when arranging one or, separated from each other, more weld layers having better toughness than other weld layers between the front surface weld layer and the back surface weld layer at a multi-pass butt welded joint to split the distribution of toughness in the plate thickness direction of the welded joint, the weld layer functions as a fracture resistance layer so that even if a brittle crack occurs inside the welded joint, its propagation in the longitudinal direction of the welded joint is arrested.
(y) when arranging, separated from each other, two or more weld pass parts of a weld metal with a fracture resistance lower than the fracture resistance of the surrounding weld metal between the front surface weld layer and the back surface weld layer at a multi-pass butt welded joint to partially split the distribution of toughness in the plate thickness direction of the welded joint, even if a brittle crack occurs inside the welded joint, its propagation in the longitudinal direction of the welded joint is arrested.
(z) when arranging, separated from each other, two or more expanded weld pass parts between the front surface weld layer and back surface weld layer at a multi-pass butt welded joint at the time of solidification and/or at the time of transformation to partially split the toughness distribution of the welded joint in the plate thickness direction and make the residual stress distribution inside of the welded joint locally complicated, even if a brittle crack occurs inside the welded joint, its propagation in the longitudinal direction of the welded joint is arrested.

The present invention was made based on the above discoveries (w) to (z) and has as its gist the following:
(1) A multi-pass butt welded joint having excellent brittle crack propagation resistance comprising a multi-pass butt welded joint of steel plates characterized in that one or, separated from each other, more of either a weld layer or weld pass part with material characteristics differing from material characteristics of the surroundings and having a function of arresting propagation of a brittle crack are present between a front surface weld layer and a back surface weld layer.
(2) A multi-pass butt welded joint having excellent brittle crack propagation resistance as set forth in the above (1) characterized in that said steel plates are steel plates having a plate thickness of 50 mm or more and each weld layer has a toughness better than the toughness of the other weld layers.
(3) A multi-pass butt welded joint having excellent brittle crack propagation resistance as set forth in the above (2) characterized in that each weld layer is a weld layer formed by a plurality of weld passes with the weld metal part formed continuously in a width direction of the welded joint.
(4) A multi-pass butt welded joint having excellent brittle crack propagation resistance as set forth in the above (2) or (3) characterized in that each weld layer comprises a plurality of weld layers stacked in a thickness direction of the welded joint.
(5) A multi-pass butt welded joint having excellent brittle crack propagation resistance as set forth in any one of the above (2) to (4) characterized in that each weld layer comprises a weld layer formed by a welding material with an amount of Ni 1% or more larger than the amount of Ni of the welding material forming other weld layers.
(6) A multi-pass butt welded joint having excellent brittle crack propagation resistance as set forth in the above (5) characterized in that each weld layer comprises a weld layer formed by a same welding method as the welding method forming the other weld layers.
(7) A multi-pass butt welded joint having excellent brittle crack propagation resistance as set forth in the above (5) or (6) characterized in that each weld layer has a structure in which no martensite transformation has occurred.
(8) A multi-pass butt welded joint having excellent brittle crack propagation resistance as set forth in any one of the above (2) to (7) characterized in that each weld layer is present continuously in a longitudinal direction of the welded joint.
(9) A multi-pass butt welded joint having excellent brittle crack propagation resistance as set forth in any one of the above (2) to (8) characterized in that each weld layer is present discontinuously in a longitudinal direction of the welded joint.
(10) A multi-pass butt welded joint having excellent brittle crack propagation resistance as set forth in the above (9) characterized in that each weld layer has a length in the longitudinal direction of the welded joint of 200 mm or more.
(11) A multi-pass butt welded joint having excellent brittle crack propagation resistance as set forth in the above (7) or (8) characterized in that each weld layer has a discontinuous interval in the longitudinal direction of the welded joint of 400 mm or less.
(12) A multi-pass butt welded joint having excellent brittle crack propagation resistance as set forth in the above (1) characterized in that said steel plates are steel plates having a plate thickness of 50 mm or more and said weld pass part has a fracture resistance inferior to a fracture resistance of the surrounding weld pass parts.
(13) A multi-pass butt welded joint having excellent brittle crack propagation resistance as set forth in the above (12) characterized in that said weld pass parts with the inferior fracture resistance are present in a number of 1/3 or less of the total number of passes required for forming the welded joint.
(14) A multi-pass butt welded joint having excellent brittle crack propagation resistance as set forth in the above (12) or (13) characterized in that said weld pass parts with the inferior fracture resistance are present separated from each other in a plate thickness direction of the welded joint.
(15) A multi-pass butt welded joint having excellent brittle crack propagation resistance as set forth in any one of the above (12) to (14) characterized in that each weld pass part with the inferior fracture resistance is present continuously in a longitudinal direction of the welded joint.
(16) A multi-pass butt welded joint having excellent brittle crack propagation resistance as set forth in any one of the above (12) to (14) characterized in that each weld pass part with the inferior fracture resistance is present discontinuously in a longitudinal direction of the welded joint.
(17) A multi-pass butt welded joint having excellent brittle crack propagation resistance as set forth in (16) characterized in that each weld pass part with the inferior fracture resistance has a length in the longitudinal direction of the welded joint of 100 mm to 400 mm.
(18) A multi-pass butt welded joint having excellent brittle crack propagation resistance as set forth in the above (16) or (17) characterized in that each weld pass part with the inferior fracture resistance is present in the longitudinal direction of the welded joint discontinuously at intervals of 200 mm to 400 mm.
(19) A multi-pass butt welded joint having excellent brittle crack propagation resistance as set forth in any one of the above (12) to (18) characterized in that each weld pass part with the inferior fracture resistance is formed by one or more passes.
(20) A multi-pass butt welded joint having excellent brittle crack propagation resistance as set forth in any one of the above (12) to (19) characterized in that each weld pass part with the inferior fracture resistance comprises a weld layer formed by a welding material with an amount of Ni 1% or more smaller than the amount of Ni of the welding material forming other weld layers.
(21) A multi-pass butt welded joint having excellent brittle crack propagation resistance as set forth in the above (20) characterized in that each weld pass part with the inferior fracture resistance comprises a weld layer formed by the same welding method as the welding method forming the other weld layers.
(22) A multi-pass butt welded joint having excellent brittle crack propagation resistance as set forth in the above (20) or (21) characterized in that each other weld layer zone has a structure in which no martensite transformation has occurred.
(23) A multi-pass butt welded joint having excellent brittle crack propagation resistance as set forth in any one of the above (12) to (22) characterized in that each weld pass part with the inferior fracture resistance is not tempered by heat of a succeeding weld pass part.
(24) A multi-pass butt welded joint having excellent brittle crack propagation resistance as set forth in the above (1) characterized in that each weld pass part is expanded at the time of solidification and/or at the time of transformation and the residual stress distribution of the inside of the welded joint is made locally complex.
(25) A multi-pass butt welded joint having excellent brittle crack propagation resistance as set forth in the above (24) characterized in that each expanded weld pass part is formed by a welding material transforming at a low temperature.
(26) A multi-pass butt welded joint having excellent brittle crack propagation resistance as set forth in the above (25) characterized in that a temperature of said transformation is 400°C or less.
(27) A multi-pass butt welded joint having excellent brittle crack propagation resistance as set forth in the above (25) or (26) characterized in that said transformation is a martensite transformation.
(28) A multi-pass butt welded joint having excellent brittle crack propagation resistance as set forth in any one of the above (25) to (27) characterized in that said welding material has an amount of Ni 1 mass% or more larger than the amount of Ni of the welding material forming the other weld pass parts.
(29) A multi-pass butt welded joint having excellent brittle crack propagation resistance as set forth in any one of the above (24) to (28) characterized in that said expanded weld pass parts are present in a number of 1/2 or less of the total number of passes required for forming the welded joint.
(30) A multi-pass butt welded joint having excellent brittle crack propagation resistance as set forth in any one of the above (24) to (29) characterized in that said expanded weld pass parts are present separated from each other in the plate thickness direction of the welded joint.
(31) A multi-pass butt welded joint having excellent brittle crack propagation resistance as set forth in any one of the above (24) to (30) characterized in that each expanded weld pass part is formed by one or more passes.
(32) A multi-pass butt welded joint having excellent brittle crack propagation resistance as set forth in any one of the above (24) to (31) characterized in that each expanded weld pass part is present continuously in the longitudinal direction of the welded joint.
(33) A multi-pass butt welded joint having excellent brittle crack propagation resistance as set forth in any one of the above (24) to (31) characterized in that each expanded weld pass part is present discontinuously in the longitudinal direction of the welded joint.
(34) A multi-pass butt welded joint having excellent brittle crack propagation resistance as set forth in the above (33) characterized in that each expanded weld pass part has a length in the longitudinal direction of the welded joint of 100 mm or more.
(35) A multi-pass butt welded joint having excellent brittle crack propagation resistance as set forth in the above (33) or (34) characterized in that each expanded weld pass part is present discontinuously at intervals of 400 mm or less in the longitudinal direction of the welded joint.
(35) A multi-pass butt welded joint having excellent brittle crack propagation resistance as set forth in any one of the above (24) to (35) characterized in that each expanded weld pass part is not tempered by heat of a succeeding weld pass part.
(37) A welded structure characterized by having a multi-pass butt welded joint having excellent brittle crack propagation resistance as set forth in any one of the above (1) to (36).

According to the present invention, in multi-pass butt welding of steel plates, in particular steel plates having a plate thickness of 50 mm or more, it is possible to form a welded joint having excellent brittle crack propagation resistance. As a result, it is possible to use steel plates, in particular steel plates having a plate thickness of 50 mm or more, to construct a welded structure having excellent brittle crack propagation resistance.

### BRIEF DESCRIPTION OF THE DRAWINGS

FIG. 1 is a view showing the results of a CCA test forming the basis of the present invention.
FIG. 2 is a view showing one embodiment of a multi-pass butt welded joint of the present invention.
FIG. 3 is a view showing another embodiment of a multi-pass butt welded joint of the present invention.
FIG. 4 is a view showing the welded joint of the present invention in the case of a single bevel groove.
FIG. 5 is a view showing an embodiment of formation of brittle cracks at a plate thickness front surface side and a plate thickness back surface side in the welded joint of the present invention.
FIG. 6 is a view showing an embodiment of occurrence of plastic deformation and ductile fracture in a region between two brittle cracks.
FIG. 7 is a view showing propagation and arrest of a brittle crack. (a) is a view showing an embodiment of occurrence of plastic deformation and ductile fracture in a region between two brittle cracks, while (b) is a view showing the embodiment in which brittle cracks are propagated to a certain extent and arrested at the plate thickness front surface side and plate thickness back surface side.
FIG. 8 is a view showing the embodiment in which a brittle crack is split, propagated to a certain extent, and arrested at the plate thickness front surface side and plate thickness back surface side even when occurring at a joint part in which there is no high toughness weld layer.
FIG. 9 is a view showing an embodiment of a multi-pass butt welded joint of the present invention.
FIG. 10 is a view showing an embodiment of formation of brittle cracks in the welded joint of the present invention.
FIG. 11 is a view showing an embodiment of occurrence of plastic deformation and ductile fracture in a region between two brittle cracks.
FIG. 12 is a view showing propagation and arrest of brittle cracks. (a) is a view showing an embodiment of occurrence of plastic deformation and ductile fracture in a region between two brittle cracks, (b) is a view showing the embodiment of arrest of brittle cracks inside a welded joint after propagation to a certain degree.
FIG. 13 is a view showing an embodiment of a multi-pass butt welded joint of the present invention.
FIG. 14 is a view showing an embodiment of formation of brittle cracks in the welded joint of the present invention.
FIG. 15 is a view showing an embodiment of propagation of brittle cracks, splitting of brittle cracks, and occurrence of plastic deformation and ductile fracture in a region between two brittle cracks.
FIG. 16 is a view showing propagation and arrest of brittle cracks. (a) is a view showing an embodiment of occurrence of plastic deformation and ductile fracture in a region between two brittle cracks, while (b) is a view showing the embodiment of arrest of brittle cracks inside a welded joint after propagation to a certain degree.

### BEST MODE FOR CARRYING OUT THE INVENTION

The present invention will be explained based on the drawings.

### 1) First, the technical idea of the present invention will be explained based on the following test results.

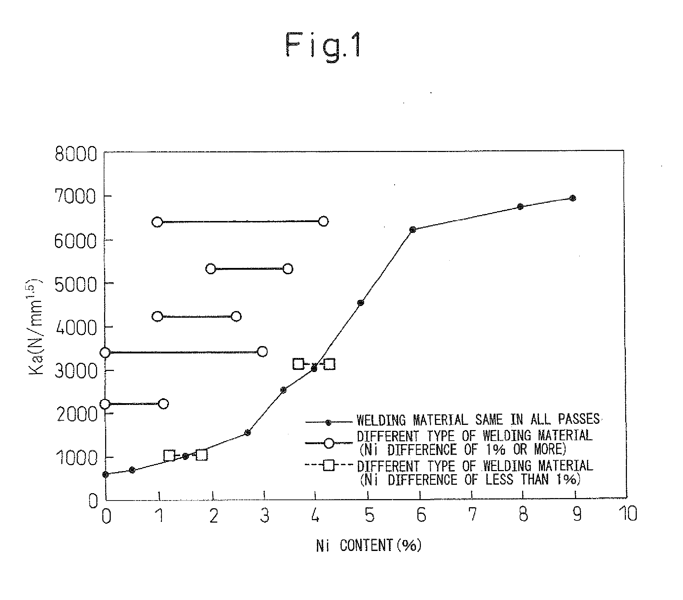

Using only one type of welding material to prepare a welded joint, a CCA test piece was prepared to evaluate the brittle crack propagation arrest performance (Ka) of a weld metal part. The CCA test piece as a whole was cooled to -10°C to find the Ka of the weld metal part prepared using one type of welding material. The results are shown in FIG. 1 (in the figure, see ● marks).

Next, two types of welding materials were used to make a welded joint. At this time, the welded joint was produced so that the weld passes formed by the two types of welding materials became distributed as prescribed by the present invention. To evaluate the brittle crack propagation arrest performance (Ka) of the weld metal part, a CCA test piece was prepared. The CCA test piece as a whole was cooled to -10°C and the Ka was found by the CCA test method. The results are shown together in FIG. 1.

The amounts of Ni of the welding materials used differ. The case where the difference in Ni content of the two types of welding materials used is 1% or more is shown in the figure by the ○ marks, while the case where the difference in Ni content is less than 1% is shown in the figure by the □ mark.

From FIG. 1, it is learned that (i) the Ka of a welded joint prepared using welding materials of different amounts of Ni is superior to the Ka of a welded joint prepared using only welding materials containing a high Ni amount. Further, it is learned that (ii) by arranging weld passes with different Ka values, a performance of at least the Ka value of the weld passes is expressed.

The present invention is founded on a technical idea based on the above discoveries.

Note that the CCA test method (compact crack arrest test method) is a test method for quantitatively evaluating brittle crack propagation arrest performance defined by the ASTM etc. and is performed as follows.

A test piece is worked so that a center of the test piece, that is, a notched part, matches with the center of the weld metal part, the test piece as a whole is inserted into a cooling tank to cool it to a predetermined temperature, here, -10°C, and a load is applied to the test piece through a wedge.

A displacement meter attached to an end of the test piece is used to calculate the K value applied to the notched tip of the test piece.

If a brittle crack occurs at the notched tip and the crack propagates, the crack tip falls in K value in accordance with the crack propagation distance. That is, when the K value of the crack tip of the test piece falls to the brittle crack propagation arrest characteristic Ka value, the brittle crack is arrested, so the K value is calculated from the crack length at the time when the crack is arrested and the K value from the amount of displacement of the test piece at that time and evaluated as the Ka value.

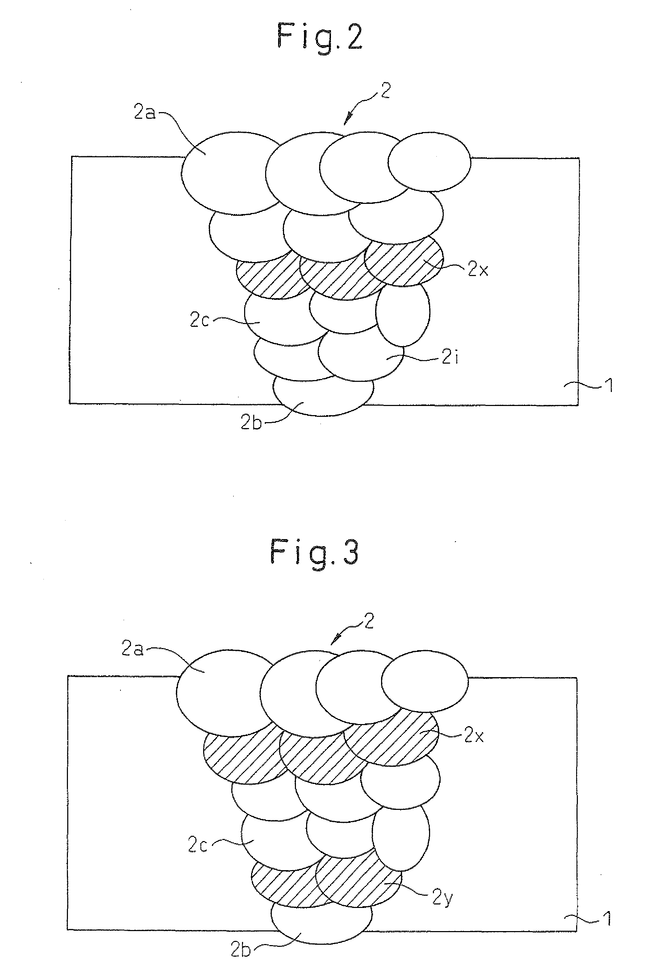

### 2) Next, the inventions of the above (2) to (11) will be explained. FIG. 2 and FIG. 3 show the embodiment of a multi-pass butt welded joint of the present invention formed by welding a butt V-groove of steel plates 1 by multi-pass welding (below, referred to as "the welded joint of the present invention").

In the welded joint 2 of the present invention shown in FIG. 2, in the plurality of weld layers between the front surface weld layer 2a and back surface weld layer 2b, a high toughness weld layer 2x provided with a superior toughness to the toughness of the weld layers 2a, 2b and 2c is formed continuously across the width direction of the welded joint.

In the welded joint 2 of the present invention shown in FIG. 3, in the plurality of weld pass parts between the front surface weld layer 2a and back surface weld layer 2b, high toughness weld layers 2x and 2y provided with a superior toughness to the toughness of the weld layers 2a, 2b, and 2c are formed straddling the weld layers 2c. When forming two or more high toughness weld layers, other weld layers are interposed between the high toughness weld layers.

Each of the weld layers comprises a plurality of weld pass parts 2i each formed by a single weld pass connected in a width direction of the welded joint.

The high toughness weld layer uses a welding material having excellent toughness compared with the welding material forming other weld layers to successively form weld pass parts 2i continuously in the width direction of the welded joint.

Usually, as the welding material for forming the other weld layers, a welding material containing Ni in a required amount has been used, but as the welding material for forming the high toughness weld layer, a welding material containing Ni in an amount 1 mass% or more greater than the amount of Ni of the welding material is preferable. It is possible to form the high toughness weld layer under the same welding conditions as when forming the other weld layers.

The high toughness weld layer may be a single layer or may be a multi-layer formed by stacking two or more high toughness weld layers. At this time, it is possible to form the two or more high toughness layers by the same welding material or to form them by welding materials changed in amount of Ni.

Further, the high toughness weld layer may also be formed by the same welding method as the welding material forming the other weld layers.

Japanese Patent Publication (A) No. 53-130242, as explained above, discloses a welding method welding an X-groove part of a thick large sized welded steel pipe during which welding an initial layer by MIG welding, then welding a front layer and back layer by submerged arc welding to weld the plate thickness as a whole wherein the amount of Ni of the welding wire used for the MIG welding is increased over the amount of Ni of the welding wire used in the submerged arc welding.

This is because, at the initial layer, weld cracks easily occur and securing toughness is difficult, so welding wire with a larger amount of Ni is used to secure a toughness equal to that of the submerged arc weld zone and level the distribution of toughness of the weld zone in the plate thickness direction. This is basically different from the technical idea of the present invention.

Note that, the welded joint of the present invention can form a high toughness weld layer at a predetermined region defined by the present invention by adjusting the Ni content of the welding material under normal welding conditions. The high toughness weld layer preferably has a structure of a structure where no martensite transformation has occurred.

Japanese Patent Publication (A) No. 2000-033480, as explained above, proposes a welding method for reducing the residual stress in the weld zone as a whole by partially using a welding material with a low transformation temperature containing a large amount (for example 11%) of Ni and utilizing a welding pass for martensite transformation from austenite.

However, the weld zone formed by this welding method has a structure of a martensite structure, so is extremely high in strength. Ultimately, even if a weld zone containing a large number of Ni, it often is lower in toughness than surrounding weld zones not containing Ni. Therefore, in the present invention, a structure not undergoing martensite transformation even when containing a large amount of Ni is preferable.

The welded joint of the present invention is characterized in that among the plurality of weld layers between the front surface weld layer and back surface weld layer, one or, straddling other weld layers between them, more layers of high toughness weld layers provided with a toughness superior to the toughness of the other weld layers are present and function as fracture resistance layers arresting propagation of brittle cracks occurring inside the welded joint in the longitudinal direction of the welded joint.

Each high toughness weld layer of the present invention may be a single layer or, as explained above, a multi-layer formed by two or more high toughness weld layers stacked together.

Note that the mechanism by which a high toughness weld layer of the present invention arrests propagation of brittle cracks occurring inside a welded joint will be explained later.

The welded joint of the present invention is obtained by butt welding steel plates having a plate thickness of 50 mm or more. If the height from the bottom of the groove of the welded joint in the plate thickness direction is 50 mm or more, it is possible to interpose other weld layers between high toughness weld layers among the plurality of weld layers so as to make the high toughness weld layers sufficiently exhibit their functions.

The welded joint of the present invention may be a multi-pass welded joint. The invention can be applied to both large heat input welding and small heat input welding.

Note that, when the steel plates have a plate thickness of 70 mm or more, the high toughness weld layer of the present invention can be made to exhibit its function more sufficiently.

The groove shape of the steel plates is not limited to a V-shape, X-shape, K-shape, single bevel shape, etc. However, when forming a high toughness weld layer, an expensive welding material containing a larger amount of Ni than general welding materials is used, so the smaller the groove width such as with an X-shape or K-shape etc., the more advantageous in terms of the welding costs.

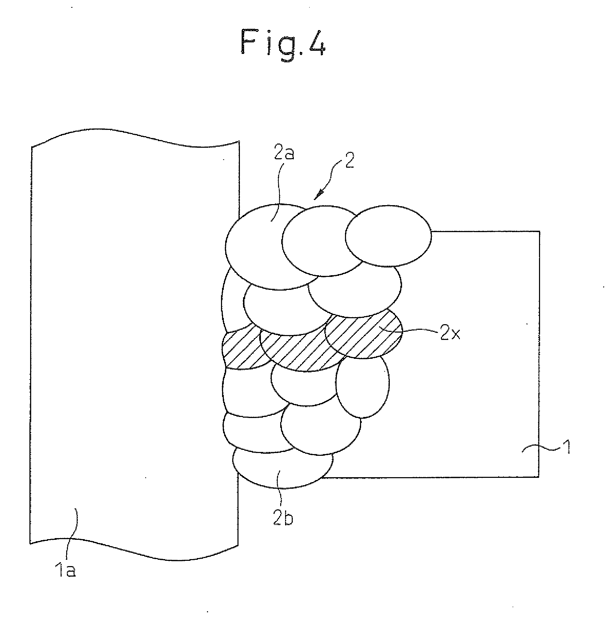

FIG. 4 shows a welded joint of the present invention in the case of a single bevel groove. As shown in FIG. 4, it is possible to apply the welded joint of the present invention even to a single bevel groove formed by making a steel plate 1a vertically abut against a steel plate 1. Further, it is possible to apply the welded joint of the present invention even to a single bevel groove formed by making steel plates of different plate thicknesses abut against each other.

The high toughness weld layer is preferably present continuously in the longitudinal direction of the welded joint, but it may also be present discontinuously. If a 200 mm or greater length is secured in the longitudinal direction of the welded joint, the high toughness weld layer exhibits the function of arresting propagation of a brittle crack occurring inside a welded joint.

However, when discontinuously forming a high toughness weld layer in the longitudinal direction of the welded joint, if the discontinuous interval exceeds 400 mm, the first formed crack may propagate and the finally formed crack may become a length of 400 mm or more. When the crack becomes a length of 400 mm or more, the energy of the crack becomes excessive and the high toughness weld layer does not sufficiently function, so the discontinuous interval in the longitudinal direction of the welded joint is limited to 400 mm or less.

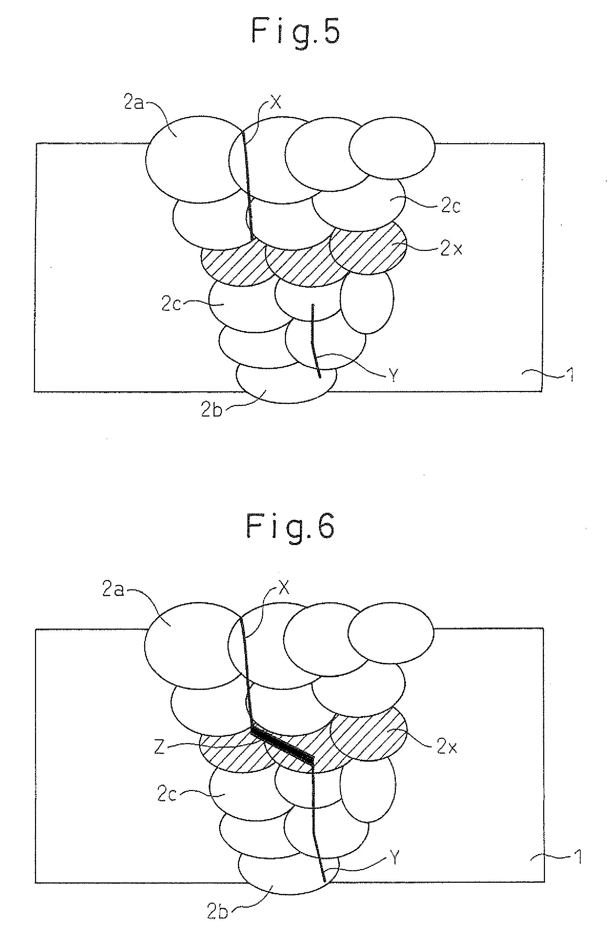

Here, the mechanism by which a high toughness weld layer of the present invention arrests propagation of a brittle crack occurring inside a welded joint will be explained based on FIGS. 5 to 8.

### [1] Case where high toughness weld layer is continuous

As shown in FIG. 2, by arranging a high toughness weld layer 2x in the weld layers 2c forming a welded joint, the distribution of toughness in the plate thickness direction of the welded joint rapidly changes at the high toughness weld layer 2x, so is split into a top and bottom part. That is, in the welded joint of the present invention shown in FIG. 2, there are low toughness weld layers 2c straddling a high toughness weld layer 2x.

If for example an impact-like stress acts on the welded joint, since the high toughness weld layer 2x is resistant to brittle fracture, a brittle crack, as shown in FIG. 5, splits into a plate thickness front surface side brittle crack X and a plate thickness back surface side brittle crack Y which then propagate in the weld layers 2c at those sides.

In FIG. 5, the brittle crack X reaches the joint front surface and high toughness weld layer 2x at its two ends, while the brittle crack Y is still present in the weld layers 2c. The two brittle cracks X and Y both become cracks narrow in width in the plate thickness direction. As a result, the stress expansion coefficients of the crack tips fall and the driving force causing the cracks to propagate becomes smaller, so propagation of the cracks is easily arrested.

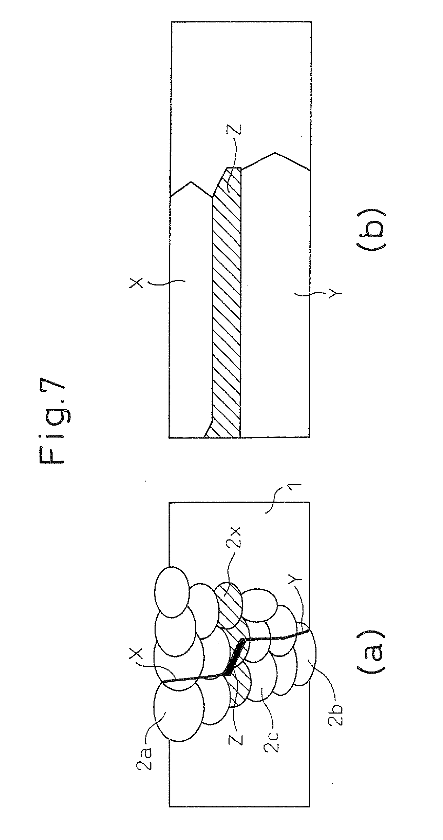

The brittle crack Y is gradually propagated in the plate thickness direction. As shown in FIG. 6, when propagated through the brittle fracture region of the weld layers 2c and reaching the high toughness weld layer 2x, plastic deformation occurs in the region Z between the brittle cracks X and Y in the high toughness weld layer 2x and, while undergoing ductile fracture, the propagation energies of the brittle cracks X and Y are absorbed. As a result, the brittle cracks X and Y, as shown in FIG. 7(b), are arrested after being propagated for certain extents at the plate thickness front surface side and plate thickness back surface side.

### [2] Case where high toughness weld layer is discontinuous

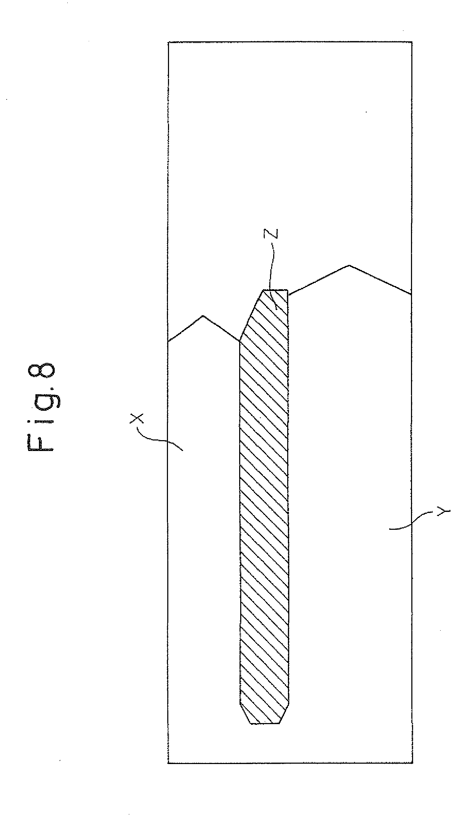

The mechanism by which a brittle crack is arrested is the same as the case of the above [1]. That is, as shown in FIG. 8, even if a brittle crack forms at a joint part with no brittle crack high toughness weld layer and propagates in the longitudinal direction of the welded joint, when reaching a high toughness weld pass, it splits into a plate thickness front surface side and a plate thickness back surface side which propagate at the respective sides and, when propagating a certain extent, are arrested.

While explained above, in the longitudinal direction of the welded joint, if securing a length of the high toughness weld layer of 200 mm or more, the high toughness weld layer can split a brittle crack into a plate thickness front surface side and plate thickness back surface side and arrest its propagation.

However, if the discontinuous interval of the high toughness weld layer exceeds 400 mm, the length of one crack becomes 400 mm or more, the energy of the crack becomes excessive, and splitting the brittle crack at the high toughness weld layer becomes difficult. For this reason, the discontinuous interval of the high toughness weld layer, as explained above, is limited to 400 mm or less.

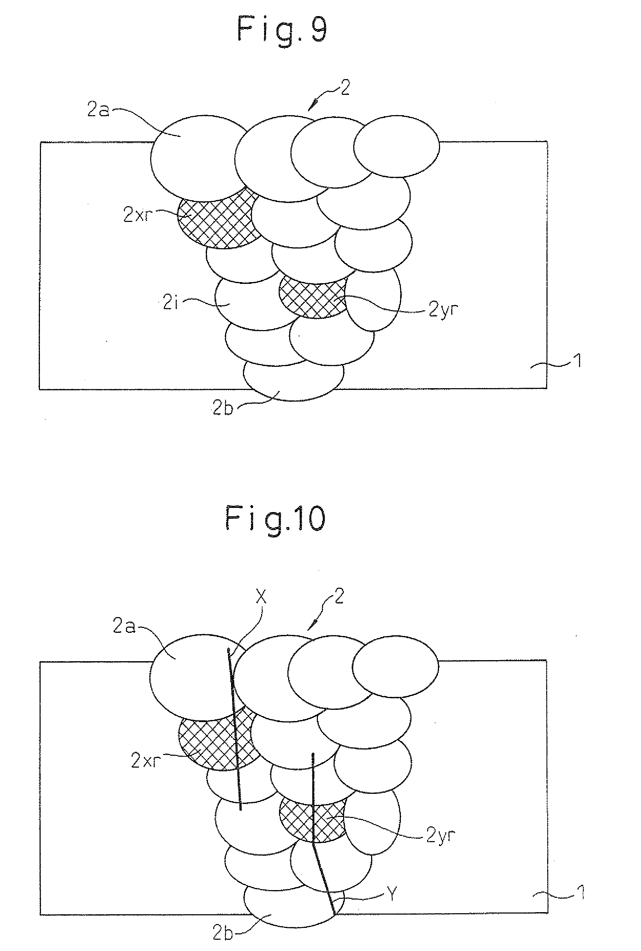

### 3) Next, the present inventions of the above (12) to (23) will be explained. FIG. 9 shows the embodiment of the multi-pass butt welded joint of the present invention formed by welding a butt V-groove of steel plates 1 by multi-pass welding (hereinafter referred to as "the welded joint of the present invention").

In the welded joint 2 of the present invention shown in FIG. 9, between the front surface weld layer 2a and back surface weld layer 2b, the weld pass part 2xr and the weld pass part 2yr with fracture resistances inferior to the fracture resistances of the surrounding weld passes are present separated from each other.

In the present invention, due to the presence of the weld pass parts 2i and the weld pass parts 2xr and 2yr with fracture toughness characteristics inferior to the fracture toughness characteristics of the weld pass parts 2i, the action and effect are exhibited that even if a brittle crack occurs inside the welded joint, its propagation is arrested.

Here, the mechanism behind expression of this action and effect will be explained.

If a sudden or impact-like stress acts on the welded joint, fractures preferentially occur at the weld pass parts 2xr and 2yr present dispersed inside the welded joint (with fracture resistances inferior to the surrounding weld zones) and brittle cracks propagate to the surrounding weld pass parts 2i.

In this case, since the fracture resistances of the weld pass parts 2i are better than the fracture resistances of the weld pass parts 2xr and 2yr, a brittle crack propagates first through the weld pass parts 2xr and 2yr, while the propagation to the weld pass parts 2i is delayed.

Ultimately, a plurality of brittle cracks propagate from the weld pass parts 2xr and 2yr to the surrounding weld pass parts 2i, but the brittle cracks become cracks narrow in width in the plate thickness direction of the welded joint, so the crack tips have small stress expansion coefficients, the driving force causing propagation of the brittle cracks becomes small, and the cracks are easily arrested.

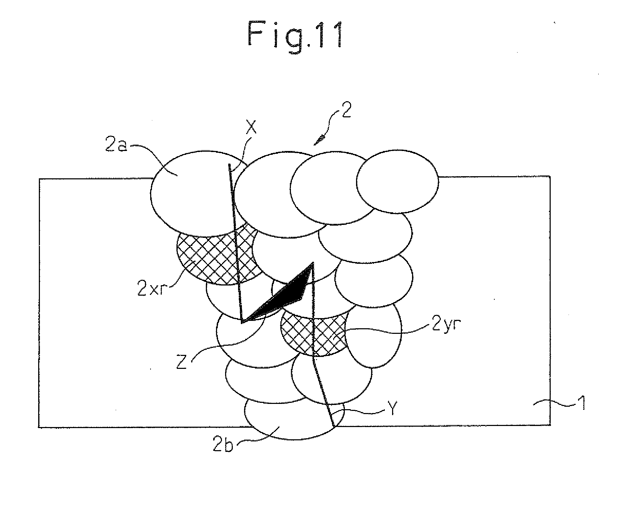

Further, as shown in FIG. 10, when brittle cracks X and Y propagate from the weld pass parts 2xr and 2yr, the region Z between the two brittle cracks X and Y becomes resistant to brittle fracture and become susceptible to shear fracture, so as shown in FIG. 11, plastic deformation occurs in the region Z and absorbs the propagation energies of the brittle cracks at the time of ductile fracture. As a result, brittle cracks in the longitudinal direction of the welded joint are arrested.

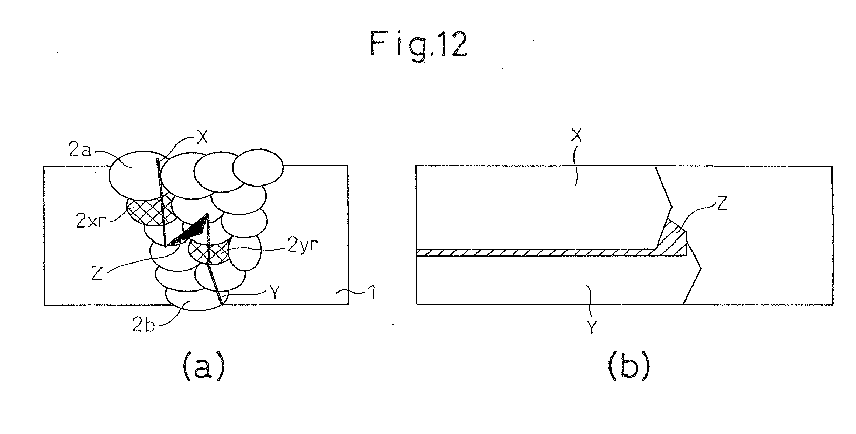

FIG. 12 shows the embodiment by which a brittle crack propagates in the longitudinal direction of the welded joint and is arrested. FIG. 12(a) is the same as FIG. 11, but FIG. 12(b) shows the embodiment of propagation and arrest of the brittle cracks X and Y in the longitudinal direction of the welded joint. Between the brittle crack X and the brittle crack Y, a ductile fracture region Z is formed where the propagation energies of the brittle cracks are absorbed, so the brittle cracks X and Y cannot continue to propagate through the welded joint in the longitudinal direction and are arrested. As a result, it is possible to prevent brittle fracture of the welded joint to prevent fracture of the welded structure.

Above, as explained above, the present invention is characterized by the arrangement, inside the multi-pass welded joint, of weld pass parts preferentially fracturing when sudden or impact-like stress acts (fracture resistance becomes inferior to surrounding weld pass parts) separated from each other.

The welded joint of the present invention comprises steel plates having a plate thickness of 50 mm or more butt welded. If the welded joint has a height of 50 mm or more, it is possible to arranged dispersed at suitable intervals two or more weld pass parts with fracture resistances inferior to the fracture resistances of the surrounding weld pass parts between the front surface weld layer and the back surface weld layer and sufficiently draw out the effect due to interaction of weld pass parts with different fracture toughness characteristics.

Note that, the effect of the present invention is more sufficiently exhibited when the steel plates have a plate thickness of 70 mm or more.

Two or more weld pass parts having fracture resistances inferior to the fracture resistances of the surrounding weld passes are necessary for making a brittle crack complicatedly split inside the welded joint. However, if the number of the weld pass parts exceeds 1/3 of the total number of passes forming the weld pass parts, the weld pass parts with low fracture resistances in the welded joint become dominant and, rather, a brittle crack easily propagates, so this is not preferable. The number of weld pass parts inferior in fracture characteristics is preferably 1/3 of the total number of passes.

Note that each weld pass part may be formed by a single pass or may be formed by a plurality of passes.

The welded joint of the present invention may be a multi-pass welded joint. The invention may be applied to both large heat input welding and small heat input welding.

The groove shape of the steel plates is not limited to a V-shape, X-shape, K-shape, single bevel shape, etc. However, to cause a brittle crack to complicatedly propagate inside a welded joint, the welded joint has to spread to a certain extent in the width direction. Further, if considering the mechanical properties of the steel plates and utilization for arresting propagation of brittle cracks, an X-groove is preferable.

The weld pass parts with the low fracture resistance usually are formed continuously in the longitudinal direction of the welded joint, but may also be formed discontinuously. Rather, discontinuous formation is preferable for the following reason.

The weld pass parts inferior in fracture characteristics are naturally inferior to the surrounding weld pass parts in fracture resistance, so the possibility of becoming fracture-generating regions is high. If weld pass parts with high possibilities of becoming fracture-generating regions are present continuously inside a welded joint in the longitudinal direction, a brittle crack will propagate through the weld pass parts and as a result there is a possibility of the cracks growing to extremely long brittle cracks passing through the welded joint in the longitudinal direction.

When forming weld pass parts inferior in fracture characteristics discontinuously in the longitudinal direction of the welded joint, the lengths of the weld pass parts in the longitudinal direction of the welded joint are preferably 100 mm or more. If the lengths of the weld pass parts in the longitudinal direction of the welded joint are 100 mm or more, it is possible to easily split a brittle crack.

On the other hand, if the lengths of the weld pass parts in the longitudinal direction of the welded joint exceed 400 mm, the length over which a brittle crack first propagates becomes too long, so this is not preferred. The lengths of the weld pass parts with the low fracture resistance in the longitudinal direction of the welded joint are preferably 100 mm to 400 mm.

If the interval of weld pass parts inferior in fracture resistance in the longitudinal direction of the welded joint is 200 mm or more, the possibility of arresting a brittle crack at the other weld pass parts rises, but if over 400 mm, a brittle crack formed at another weld pass part may propagate and grow into a single brittle crack of a length of 400 mm or more.

If the length of one brittle crack in the longitudinal direction of the welded joint exceeds 400 mm, the energy of the brittle crack becomes excessive. Even if the brittle crack is guided to a weld pass part inferior in fracture characteristics, it will be harder to split at the weld pass part. The interval of the weld pass parts inferior in fracture characteristics in the longitudinal direction of the welded joint is therefore preferably 200 mm to 400 mm.

As a method for forming a weld pass part inferior in brittle fracture characteristics compared with the surrounding weld pass parts, a method of using a welding material with an amount of Ni of 1% or more lower than the amount of Ni of the welding material used for forming the surrounding weld pass parts and welding under the same welding conditions is simple and preferable.

However, the method cannot be employed when the welding material forming the surrounding weld pass parts does not contain Ni, so in this case, a welding material with a high amount of C or a welding material without any Ti, B, or other structure refining elements added (all welding materials low in fracture resistance) may be used.

Further, it is also possible to lower the fracture resistance of the weld pass part by changing the welding conditions.

For example, when forming a weld pass part inferior in fracture resistance, if making the heat input 130% or more of the heat input at the time of forming the surrounding weld pass parts, it is possible to form a large throat depth weld pass part. Further, next, a weld pass part is formed on the large throat depth weld pass part under ordinary heat input conditions or at heat input conditions lower than ordinary heat input conditions. If welded in this way, the large throat depth weld pass part is not tempered by the heat of the succeeding weld pass part and becomes a weld pass part inferior in fracture resistance.

Note that, it is also possible to form a weld pass part inferior in fracture resistance by the same welding method as the welding method for forming the other weld pass parts. The structure of the weld pass part is preferably a structure where no martensite transformation has occurred.

In the present invention, it is sufficient to form a weld pass part inferior in fracture resistance inside the welded joint. The method of formation is not limited to any specific method. For example, it is possible to use an insufficiently dried welding material and form only weld pass parts inferior in fracture resistance.

As explained above, the welded joint of the present invention is one having an excellent brittle crack propagation resistance characteristic. A welded structure having the welded joint of the present invention is resistant to brittle fracture.

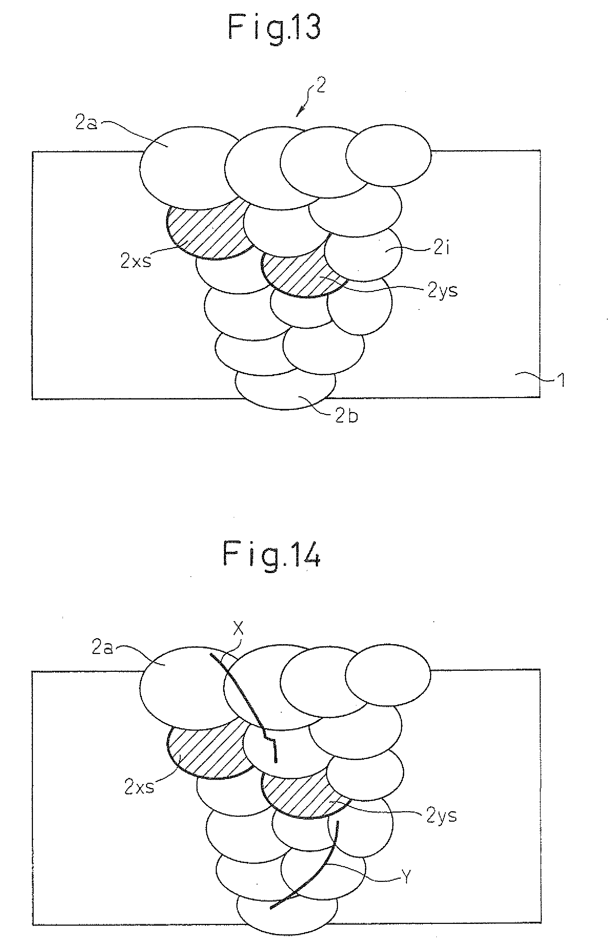

### 4) Furthermore, the present inventions of the above (24) to (36) will be explained. FIG. 13 shows the embodiment of a multi-pass butt welded joint of the present invention steel plate 1 formed by welding a butt V-groove by multi-pass welding (hereinafter referred to as "the welded joint of the present invention").

In the welded joint 2 of the present invention shown in FIG. 13, between the front surface weld layer 2a and back surface weld layer 2b, the weld pass part 2xs and weld pass part 2ys expanding at the time of solidification and/or at the time of transformation are present separated from each other. Further, in the welded joint of the present invention, the presence of the other weld pass parts 2i and the presence of the expanded weld pass parts 2xs and 2ys combine so that even if a brittle crack occurs inside the welded joint, the action and effect of arresting propagation are exhibited.

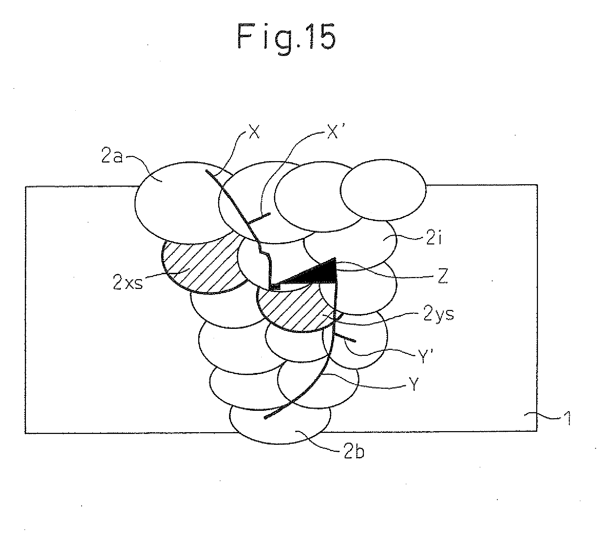

Here, the mechanism by which this action and effect are expressed will be explained based on FIG. 14 and FIG. 15.

If sudden or impact-like stress acts on welded joint and brittle cracks X and Y are formed, the brittle cracks X and Y propagate through the surrounding weld pass parts 2i. However, the propagation paths of the brittle cracks X and Y, as shown in FIG. 14, are not regularly determined and become complicated due to the presence of the weld pass part 2xs and weld pass part 2ys. The reason is as follows:
If the expanded weld pass part 2xs and weld pass part 2ys are present in the other weld pass parts 2i, the weld pass part 2xs and weld pass part 2ys will act in a direction compressing the surrounding residual stress to locally disturb the residual stress distribution of the inside the welded joint.

Usually, a brittle crack formed inside the welded joint propagates vertical to the main stress, so the path of propagation of the brittle crack becomes parallel to the plate thickness direction of the welded joint, but in the welded joint of the present invention, the residual stress distribution of the inside the welded joint is locally disturbed, so at that part, the main stress does not act on the brittle crack, so the brittle crack is affected by the disturbed residual stress distribution and does not propagate along the plate thickness direction.

By what path a brittle crack will propagate in a disturbed residual stress distribution cannot be predicted, but the path of propagation of the brittle crack is locally deflected by being twisted from the direction vertical to the main stress (plate thickness direction), so the path of propagation of the brittle crack becomes complicated.

In this way, a brittle crack propagates a complicated propagation path formed by twisting from the plate thickness direction, so, as shown in FIG. 15, during the propagation of the brittle crack, the brittle crack splits (in the figure, X' and Y') and a ductile fracture region is partially formed between the brittle crack X and the brittle crack Y. As a result, the propagation energies of the brittle cracks X and Y are absorbed and propagation of the brittle cracks in the longitudinal direction of the welded joint is arrested.

The split brittle cracks X' and Y' also are formed twisted from the plate thickness direction of the welded joint and further become narrow width sunken cracks, so the crack tips have small stress expansion coefficients, the driving force causing propagation of the brittle cracks becomes small, and the cracks are easily arrested.

That is, the welded joint of the present invention is characterized by forming a disturbed residual stress distribution inside the joint so as to make the path of propagation of a brittle crack complicated and thereby facilitate absorption of the propagation energy of the brittle crack and as a result arrest propagation of the brittle crack in the longitudinal direction of the welded joint.

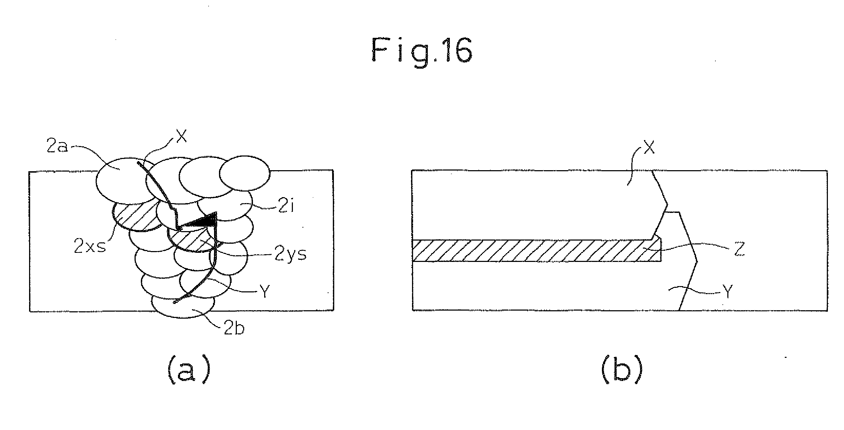

FIG. 16 shows the embodiment by which a brittle crack propagates and is arrested in the longitudinal direction of the welded joint. FIG. 16(a) shows the welded joint shown in FIG. 15 in which the split brittle cracks X' and Y' are omitted. FIG. 16(b) shows the state of propagation and arrest of the brittle cracks X and Y in the longitudinal direction of the welded joint.

Between the brittle crack X and brittle crack Y, a ductile fracture region Z is formed whereby the propagation energies of the brittle cracks are absorbed. As a result, the brittle cracks X and Y cannot continue propagating through the welded joint and are arrested.

The welded joint of the present invention comprises steel plates butt welded together. Further, if the welded joint has a thickness of an extent enabling multi-pass welding, it is possible to arrange two or more weld pass parts which expand at the time of solidification and/or at the time of transformation, apply a compressive stress to the surrounding weld pass parts, and logically disturb the residual stress (hereinafter sometimes referred to as "expanded weld pass parts") dispersed at suitable intervals between the front surface weld layer and the back surface weld layer and sufficiently draw out the brittle crack propagation arrest effect based on the disturbed residual stress distribution.

Two or more expanded weld passes are necessary for disturbing the residual stress distribution inside the welded joint. However, if the number of the expanded weld pass parts exceeds 1/2 of the total number of passes for forming the weld pass parts, the residual stress due to the expanded weld pass parts becomes dominant. Conversely, the extent of disturbance due to the residual stress distribution inside the welded joint becomes smaller and the effect of arrest of brittle crack propagation becomes harder to obtain. The number of the expanded weld pass parts is preferably about 1/3 of the total number of passes.

Note that, the weld pass parts may be formed by a single pass or may be formed by a number of passes.

The welded joint of the present invention need only be a multi-pass welded joint. The invention can be applied to both large heat input welding and small heat input welding.

The groove shape of the steel plates is not limited to a V-shape, X-shape, K-shape, single bevel shape, etc. However, to make the path of propagation of a brittle crack inside the welded joint complicated, the welded joint has to spread to a certain extent in the width direction. Further, if considering the mechanical properties of the steel plates and utilization for arresting propagation of brittle cracks, an X-groove or a K-groove is preferable.

The expanded weld pass parts usually may be formed continuously or formed discontinuously in the longitudinal direction of the welded joint. Rather, discontinuous formation is preferable since the brittle crack propagation arrest effect due to disturbance of the residual stress distribution can be remarkably drawn out.

When forming the expanded weld pass parts discontinuously in the longitudinal direction of the welded joint, the lengths of the weld pass parts in the longitudinal direction of the welded joint are preferably 100 mm or more. If the lengths of the weld pass parts in the longitudinal direction of the welded joint are 100 mm or more, the residual stress distribution can be locally disturbed and the brittle crack propagation arrest effect can be secured.

Further, when forming the expanded weld pass parts discontinuously, if the intervals of the weld pass parts in the longitudinal direction of the welded joint are over 400 mm, the length of a brittle cracks propagating in advance will become too long, so this is not preferable.

If the length of one brittle crack in the longitudinal direction of the welded joint becomes 400 mm or more, the energy of the brittle crack becomes excessive. Even if the brittle crack enters a region with a disturbed residual stress distribution, the brittle crack will be resistant to being split at this region and the propagation energy of the crack tip will not be reduced. For this reason, the intervals of the expanded weld pass parts in the longitudinal direction of the welded joint are preferably 400 mm or less.

The expanded weld pass parts acting on the surrounding compressive residual stress are formed using a welding material with a transformation temperature at the low temperature side. The welding material is not particularly limited in transformation temperature, but to remarkably bring out the brittle crack propagation arrest effect, a welding material exhibiting a transformation temperature of 400°C or less in the cooling process when subjecting the weld metal to a Formaster test is preferable.

In general, a welding material with a high amount of Ni has a transformation temperature at the low temperature side. In this respect, it is preferable as the welding material forming expanded weld pass parts. However, even with a welding material with a high amount of Ni, the transformation temperature greatly changes depending on the chemical composition, so it is necessary to measure the transformation temperature and then select a suitable welding material.

Further, a welding material with a high amount of Ni is also a welding material in which a high temperature crack can easily occur, so when using this welding material, it is necessary to select suitable welding conditions.

Further, the means for applying compressive residual stress to the surrounding weld pass parts and forming local disturbance in the residual stress distribution is not limited to formation of weld pass parts by a welding material expanding at the time of solidification and/or at the time of transformation. In the final analysis, it is sufficient that the means be able to apply compressive residual stress to the surrounding weld pass parts and form local disturbances in the residual stress distribution.

For example, by hammer peening or ultrasonically treating specific weld pass parts during welding to locally form compressive residual stress, it is possible to obtain a brittle crack propagation arrest effect in the same way as forming expanded weld pass parts.

As explained above, the welded joint of the present invention is one having an excellent brittle crack propagation resistance. A welded structure having the welded joints of the present invention is resistant to brittle fracture.

### EXAMPLES

Next, examples of the present invention will be explained, but the conditions of the examples are illustrations of conditions adopted for confirming the workability and effects of the present invention. The present invention is not limited to this illustration of conditions. The present invention can employ various conditions so long as not departing from the gist of the present invention and achieving the object of the present invention.

### (Example 1)

This is an example relating to the present inventions of the above (1), (2) to (11), and (37).

Welded joints were formed under the steel plate conditions and weld pass conditions shown in Table 1 and were measured by brittle crack propagation tests for brittle crack propagation resistance. The results are shown in Table 2. Note that the compositions of ingredients of the materials of the steel plates used are shown in Table 3.

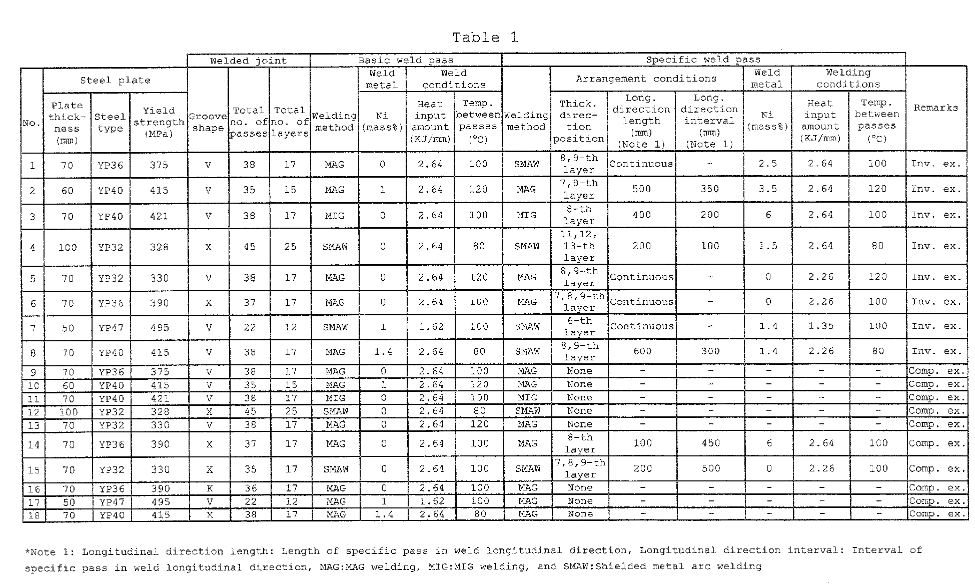

**Table 2**

| No. | Brittle crack propagation test of welded joint | | | | Results | Remarks |
|---|---|---|---|---|---|---|
| | Load stress (MPa) | Test temperature (°C) | No. of brittle cracks propagated | Arrested crack length (mm) | | |
| 1 | 240 | -10 | 2 | 420 | Arrested | Inv. ex. |
| 2 | 240 | -10 | 2 | 650 | Arrested | Inv. ex. |
| 3 | 320 | -10 | 2 | 750 | Arrested | Inv. ex. |
| 4 | 200 | -10 | 2 | 350 | Arrested | Inv. ex. |
| 5 | 200 | -10 | 2 | 320 | Arrested | Inv. ex. |
| 6 | 240 | -10 | 2 | 830 | Arrested | Inv. ex. |
| 7 | 280 | -10 | 2 | 240 | Arrested | Inv. ex. |
| 8 | 240 | -10 | 2 | 315 | Arrested | Inv. ex. |
| 9 | 240 | -10 | 1 | 2500 | Propagated | Comp. ex. |
| 10 | 240 | -10 | 1 | 2500 | Propagated | Comp. ex. |
| 11 | 320 | -10 | 1 | 2500 | Propagated | Comp. ex. |
| 12 | 200 | -10 | 1 | 2500 | Propagated | Comp. ex. |
| 13 | 200 | -10 | 1 | 2500 | Propagated | Comp. ex. |
| 14 | 240 | -10 | 1 | 2500 | Propagated | Comp. ex. |
| 15 | 200 | -10 | 1 | 2500 | Propagated | Comp. ex. |
| 16 | 240 | -10 | 1 | 2500 | Propagated | Comp. ex. |
| 17 | 280 | -10 | 1 | 2500 | Propagated | Comp. ex. |
| 18 | 240 | -10 | 1 | 2500 | Propagated | Comp. ex. |

**Table 3**

| (mass%) | | | | | | | |
|---|---|---|---|---|---|---|---|
| Steel type | C | Si | Mn | P | S | Ni | Ti |
| YP32 | 0.13 | 0.19 | 1.28 | 0.01 | 0.003 | | 0.01 |
| YP36 | 0.12 | 0.21 | 1.27 | 0.007 | 0.004 | | 0.01 |
| YP40 | 0.11 | 0.21 | 1.3 | 0.006 | 0.003 | | 0.01 |
| YP47 | 0.08 | 0.24 | 1.22 | 0.007 | 0.002 | 1.02 | 0.01 |

In Table 1, the "specific weld pass" is a weld pass forming a high toughness weld layer.

In the invention examples of Nos. 1 to 8, it is learned that even if brittle cracks propagate in the longitudinal direction of welded joints, they are short in length and are immediately arrested.

### (Example 2)

This is an example relating to the present invention of the above (1), (12) to (23), and (37).

Welded joints were formed under the steel plate conditions and weld pass conditions shown in Table 4 and were measured by brittle crack propagation tests for brittle crack propagation resistance. The results are shown in Table 5. Note that, the compositions of ingredients of the materials of the steel plates used are shown in Table 6.

**Table 4**

| No. | Steel plate | | | Weld joint | | Basic weld pass | | | Specific weld pass | | | | | | Remarks |
|---|---|---|---|---|---|---|---|---|---|---|---|---|---|---|---|
| | | | | | | Weld metal | Welding conditions | | Arrangement conditions | | | Weld metal | Welding conditions | | |
| | Plate thickness (mm) | Steel type | Yield strength (MPa) | Groove shape | Total no. of passes | Ni (mass%) | Heat input amount (KJ/mm) | Temp. between passes (°C) | Pass no. | Long direction length (mm) (Note 1) | Long. direction interval (mm) (Note 1) | Ni (mass% | Heat input amount (KJ/mm) | Temp. between passes (°C) | |
| 1 | 70 | YP36 | 375 | V | 38 | 1.4 | 2.64 | 100 | 5,10,18,26,30 | Continuous | - | 0 | 2.64 | 100 | Inv. ex. |
| 2 | 60 | YP40 | 415 | V | 35 | 1.4 | 2.64 | 120 | 10,11,25,26 | 500 | 350 | 0 | 2.64 | 120 | Inv. ex. |
| 3 | 70 | YP40 | 421 | V | 38 | 2.5 | 2.64 | 100 | 10,16,21,32 | 400 | 200 | 1 | 2.64 | 100 | Inv. ex. |
| 4 | 100 | YP32 | 328 | X | 45 | 2.5 | 2.64 | 80 | 5,10,16,21,34,39 | 200 | 100 | 0 | 2.64 | 80 | Inv. ex. |
| 5 | 70 | YP32 | 330 | V | 38 | 3.2 | 2.26 | 120 | 2,8,9,13,15,16,21 22,29,30,32 | Continuous | - | 1 | 2.64 | 120 | Inv. ex. |
| 6 | 70 | YP36 | 390 | X | 37 | 1.4 | 2.26 | 100 | 8,9,15,16,21,23 | Continuous | - | 1.4 | 2.64 | 100 | Inv. ex. |
| 7 | 50 | YP47 | 495 | V | 22 | 1 | 1.35 | 100 | 4,8,11,17 | Continuous | - | 1 | 2.62 | 100 | Inv. ex. |
| 8 | 70 | YP40 | 415 | V | 38 | 1.4 | 2.26 | 80 | 4,7,11,19,23,27 | 600 | 300 | 1.4 | 3.05 | 80 | Inv. ex. |
| 9 | 70 | YP36 | 375 | V | 38 | 0 | 2.64 | 100 | None | - | - | - | - | - | Comp. ex. |
| 10 | 60 | YP40 | 415 | V | 35 | 1 | 2.64 | 120 | None | - | - | - | - | - | Comp. ex. |
| 11 | 70 | YP40 | 421 | V | 38 | 0 | 2.64 | 100 | None | - | - | - | - | - | Comp. ex. |
| 12 | 100 | YP32 | 328 | X | 45 | 0 | 2.64 | 80 | None | - | - | - | - | - | Comp. ex. |
| 13 | 70 | YP32 | 330 | V | 38 | 0 | 2.64 | 120 | None | - | - | - | - | - | Comp. ex. |
| 14 | 70 | YP36 | 390 | X | 37 | 0 | 2.64 | 100 | 8,9,15,16,21,23 | 100 | 450 | 6 | 2.64 | 100 | Comp. ex. |
| 15 | 70 | YP32 | 330 | X | 35 | 0 | 2.64 | 100 | 4,8,11,17 | 200 | 500 | 2.1 | 2.26 | 100 | Comp. ex. |
| 16 | 70 | YP36 | 390 | K | 36 | 0 | 2.64 | 100 | None | - | - | - | - | - | Comp. ex. |
| 17 | 50 | YP47 | 495 | V | 22 | 1 | 1.62 | 100 | None | - | - | - | - | - | Comp. ex. |
| 18 | 70 | YP40 | 415 | X | 38 | 1.4 | 2.64 | 80 | None | - | - | - | - | - | Comp. ex. |

| | | | | | | | | | | | | | | | |
|---|---|---|---|---|---|---|---|---|---|---|---|---|---|---|---|
| *Note 1: Longitudinal direction length: Length of specific pass in weld longitudinal direction, Longitudinal direction interval: Interval of specific pass in weld longitudinal direction. | | | | | | | | | | | | | | | |

**Table 5**

| No. | Brittle crack propagation test of welded joint | | | | Results | Remarks |
|---|---|---|---|---|---|---|
| | Load stress (MPa) | Test temperature (°C) | No. of splits of brittle crack | Arrested crack length (mm) | | |
| 1 | 240 | -10 | 3 | 420 | Arrested | Inv. ex. |
| 2 | 240 | -10 | 2 | 650 | Arrested | Inv. ex. |
| 3 | 320 | -10 | 2 | 750 | Arrested | Inv. ex. |
| 4 | 200 | -10 | 3 | 340 | Arrested | Inv. ex. |
| 5 | 200 | -10 | 2 | 580 | Arrested | Inv. ex. |
| 6 | 240 | -10 | 3 | 550 | Arrested | Inv. ex. |
| 7 | 280 | -10 | 2 | 650 | Arrested | Inv. ex. |
| 8 | 240 | -10 | 4 | 315 | Arrested | Inv. ex. |
| 9 | 240 | -10 | - | 2500 | Propagated | Comp. ex. |
| 10 | 240 | -10 | - | 2500 | Propagated | Comp. ex. |
| 11 | 320 | -10 | - | 2500 | Propagated | Comp. ex. |
| 12 | 200 | -10 | - | 2500 | Propagated | Comp. ex. |
| 13 | 200 | -10 | - | 2500 | Propagated | Comp. ex. |
| 14 | 240 | -10 | - | 2500 | Propagated | Comp. ex. |
| 15 | 200 | -10 | - | 2500 | Propagated | Comp. ex. |
| 16 | 240 | -10 | - | 2500 | Propagated | Comp. ex. |
| 17 | 280 | -10 | - | 2500 | Propagated | Comp. ex. |
| 18 | 240 | -10 | - | 2500 | Propagated | Comp. ex. |

**Table 6**

| (mass%) | | | | | | | |
|---|---|---|---|---|---|---|---|
| Steel type | C | Si | Mn | P | S | Ni | Ti |
| YP32 | 0.13 | 0.19 | 1.28 | 0.01 | 0.003 | | 0.01 |
| YP36 | 0.12 | 0.21 | 1.27 | 0.007 | 0.004 | | 0.01 |
| YP40 | 0.11 | 0.21 | 1.3 | 0.006 | 0.003 | | 0.01 |
| YP47 | 0.08 | 0.24 | 1.22 | 0.007 | 0.002 | 1.02 | 0.01 |

In Table 4, the "specific weld pass" is a weld pass forming a weld pass inferior in fracture resistance.

From Table 5, it is learned that in the invention examples of Nos. 1 to 8, even if brittle cracks propagate in the longitudinal direction of the welded joints, they are short in length and are immediately arrested.

### (Example 3)

This is an example relating to the present inventions of the above (1), (24) to (36), and (37).

Welded joints were formed under the steel plate conditions and weld pass conditions shown in Table 7 and were measured by brittle crack propagation tests for brittle crack propagation resistance. The results are shown in Table 8. Note that the compositions of ingredients of the materials of the steel plates used are shown in Table 9.

**Table 7**

| No. | Steel plate | | | Welded joint | | Basic weld pass | | | Specific weld pass | | | | | | Remarks |
|---|---|---|---|---|---|---|---|---|---|---|---|---|---|---|---|
| | | | | | | Weld metal | Welding conditions | | Arrangement conditions | | | Weld metal | Welding conditions | | |
| | plate thickness (mm) | Steel type | Yield strength (MPa) | Groove shape | Total no. of passes | Welding material | Heat input amount (KJ/mm) | Temp. between passes (°C) | Pass no. | Long. direction length (mm) (Note 1) | Long. direction interval (Note 1) | Weld material | Heat input amount (KJ/mm) | Temp. between passes (°C) | |
| 1 | 70 | YP36 | 375 | V | 38 | SF-36E | 2.64 | 100 | 5,10,18,26,30 | Continuous | - | LTT1 | 2.64 | 100 | Inv. ex. |
| 2 | 60 | YP40 | 415 | V | 35 | SF-36E | 2.64 | 120 | 10,11,25,26 | 500 | 350 | LTT2 | 2.64 | 120 | Inv. ex. |
| 3 | 70 | YP40 | 421 | V | 38 | SF-47E | 2.64 | 100 | 10,16,21,32 | 400 | 200 | LTT3 | 2.64 | 100 | Inv. ex. |
| 4 | 100 | YP32 | 328 | X | 45 | SF-36E | 2.64 | 80 | 5,10,16,21,34,39 | 200 | 100 | LTT4 | 2.64 | 80 | Inv. ex. |
| 5 | 70 | YP32 | 330 | V | 38 | SF-36E | 2.26 | 120 | 2,3,4,8,9,13,15,16,2 1,22,23,,29,30,32 | Continuous | - | LTT5 | 2.26 | 120 | Inv. ex. |
| 6 | 70 | YP36 | 390 | X | 37 | SF-36E | 2.26 | 100 | 8,9,15,16,21,23 | Continuous | - | LTT1 | 2.26 | 100 | Inv. ex. |
| 7 | 50 | YP47 | 495 | V | 22 | SF-47E | 1.35 | 100 | 8,,17 | Continuous | - | LTT1 | 1.35 | 100 | Inv. ex. |
| 8 | 70 | YP40 | 415 | V | 38 | SF-36E | 2.26 | 80 | 4,7,11,19,23,27 | 600 | 300 | LTT1 | 2.26 | 80 | Inv. ex. |
| 9 | 70 | YP36 | 375 | V | 38 | 0 | 2.64 | 100 | None | - | - | - | - | - | Comp. ex. |
| 10 | 60 | YP40 | 415 | V | 35 | 1 | 2.64 | 120 | None | - | - | - | - | - | Comp. ex. |
| 11 | 70 | YP40 | 421 | V | 38 | 0 | 2.64 | 100 | None | - | - | - | - | - | Comp. ex. |
| 12 | 100 | YP32 | 328 | X | 45 | 0 | 2.64 | 80 | None | - | - | - | - | - | Comp. ex. |
| 13 | 70 | YP32 | 330 | V | 38 | 0 | 2.64 | 120 | None | - | - | - | - | - | Comp. ex. |
| 14 | 70 | YP36 | 390 | X | 37 | 0 | 2.64 | 100 | 8,9,15,16,21,23 | 100 | 450 | LTT1 | 2.64 | 100 | Comp. ex. |
| 15 | 70 | YP32 | 330 | X | 35 | 0 | 2.64 | 100 | 4,8,11,17 | 200 | 500 | LTT2 | 2.64 | 100 | Comp. ex. |
| 16 | 70 | YP36 | 390 | K | 36 | 0 | 2.64 | 100 | None | - | - | - | - | - | Comp. ex. |
| 17 | 50 | YP47 | 495 | V | 22 | 1 | 1.62 | 100 | None | - | - | - | - | - | Comp. ex. |
| 18 | 70 | YP40 | 415 | X | 38 | 1.4 | 2.64 | 80 | None | - | - | - | - | - | Comp. ex. |

| | | | | | | | | | | | | | | | |
|---|---|---|---|---|---|---|---|---|---|---|---|---|---|---|---|
| *Note 1: Longitudinal direction length: Length of specific pass in weld longitudinal direction, Longitudinal direction interval: Interval of specific pass in weld longitudinal direction. | | | | | | | | | | | | | | | |

**Table 8**

| No. | Brittle crack propagation test of welded joint | | | | Results | Remarks |
|---|---|---|---|---|---|---|
| | Load stress (MPa) | Test temperature (°C) | Number of splits of brittle crack | Arrested crack length (mm) | | |
| 1 | 240 | -10 | 4 | 320 | Arrested | Inv. ex. |
| 2 | 240 | -10 | 5 | 470 | Arrested | Inv. ex. |
| 3 | 320 | -10 | 3 | 520 | Arrested | Inv. ex. |
| 4 | 200 | -10 | 5 | 305 | Arrested | Inv. ex. |
| 5 | 200 | -10 | 3 | 380 | Arrested | Inv. ex. |
| 6 | 240 | -10 | 4 | 405 | Arrested | Inv. ex. |
| 7 | 280 | -10 | 3 | 390 | Arrested | Inv. ex. |
| 8 | 240 | -10 | 5 | 258 | Arrested | Inv. ex. |
| 9 | 240 | -10 | - | 2500 | Propagated | Comp. ex. |
| 10 | 240 | -10 | - | 2500 | Propagated | Comp. ex. |
| 11 | 320 | -10 | - | 2500 | Propagated | Comp. ex. |
| 12 | 200 | -10 | - | 2500 | Propagated | Comp. ex. |
| 13 | 200 | -10 | - | 2500 | Propagated | Comp. ex. |
| 14 | 240 | -10 | - | 2500 | Propagated | Comp. ex. |
| 15 | 200 | -10 | - | 2500 | Propagated | Comp. ex. |
| 16 | 240 | -10 | - | 2500 | Propagated | Comp. ex. |
| 17 | 280 | -10 | - | 2500 | Propagated | Comp. ex. |
| 18 | 240 | -10 | - | 2500 | Propagated | Comp. ex. |

**Table 9**

| (mass%) | | | | | | | |
|---|---|---|---|---|---|---|---|
| Steel type | C | Si | Mn | P | S | Ni | Ti |
| YP32 | 0.13 | 0.19 | 1.28 | 0.01 | 0.003 | | 0.01 |
| YP36 | 0.12 | 0.21 | 1.27 | 0.007 | 0.004 | | 0.01 |
| YP40 | 0.11 | 0.21 | 1.3 | 0.006 | 0.003 | | 0.01 |
| YP47 | 0.08 | 0.24 | 1.22 | 0.007 | 0.002 | 1.02 | 0.01 |

In Table 7, the specific weld pass is a weld pass changed in residual stress.

From Table 8, it is learned that in the invention examples of Nos. 1 to 8, even if brittle cracks propagate, they are short in length and are immediately arrested.

### INDUSTRIAL APPLICABILITY

As explained above, according to the present invention, it is possible to use steel plates, in particular steel plates having a plate thickness of 50 mm or more, to produce a welded structure having welded joints having excellent brittle crack propagation resistance. Therefore, the present invention has great applicability in the field of construction of welded structures.

## Claims

1. A multi-pass butt welded joint having excellent brittle crack propagation resistance comprising a multi-pass butt welded joint of steel plates **characterized in that** one or, separated from each other, more of either a weld layer or weld pass part with material characteristics differing from material characteristics of the surroundings and having a function of arresting propagation of a brittle crack are present between a front surface weld layer and a back surface weld layer.

2. A multi-pass butt welded joint having excellent brittle crack propagation resistance as set forth in claim 1 **characterized in that** said steel plates are steel plates having a plate thickness of 50 mm or more and each weld layer has a toughness better than the toughness of the other weld layers.

3. A multi-pass butt welded joint having excellent brittle crack propagation resistance as set forth in claim 2 **characterized in that** each weld layer is a weld layer formed by a plurality of weld passes with the weld metal part formed continuously in a width direction of the welded joint.

4. A multi-pass butt welded joint having excellent brittle crack propagation resistance as set forth in claim 2 or 3 **characterized in that** each weld layer comprises a plurality of weld layers stacked in a thickness direction of the welded joint.

5. A multi-pass butt welded joint having excellent brittle crack propagation resistance as set forth in any one of claims 2 to 4 **characterized in that** each weld layer comprises a weld layer formed by a welding material with an amount of Ni 1% or more larger than the amount of Ni of the welding material forming other weld layers.

6. A multi-pass butt welded joint having excellent brittle crack propagation resistance as set forth in claim 5 **characterized in that** each weld layer comprises a weld layer formed by a same welding method as the welding method forming the other weld layers.

7. A multi-pass butt welded joint having excellent brittle crack propagation resistance as set forth in claim 5 or 6 **characterized in that** each weld layer has a structure in which no martensite transformation has occurred.

8. A multi-pass butt welded joint having excellent brittle crack propagation resistance as set forth in any one of claims 2 to 7 **characterized in that** each weld layer is present continuously in a longitudinal direction of the welded joint.

9. A multi-pass butt welded joint having excellent brittle crack propagation resistance as set forth in any one of claims 2 to 8 **characterized in that** each weld layer is present discontinuously in a longitudinal direction of the welded joint.

10. A multi-pass butt welded joint having excellent brittle crack propagation resistance as set forth in claim 9 **characterized in that** each weld layer has a length in the longitudinal direction of the welded joint of 200 mm or more.

11. A multi-pass butt welded joint having excellent brittle crack propagation resistance as set forth in claim 7 or 8 **characterized in that** each weld layer has a discontinuous interval in the longitudinal direction of the welded joint of 400 mem or less.

12. A multi-pass butt welded joint having excellent brittle crack propagation resistance as set forth in claim 1 **characterized in that** said steel plates are steel plates having a plate thickness of 50 mm or move and said weld pass part has a fracture resistance inferior to a fracture resistance of the surrounding weld pass parts.

13. A multi-pass butt welded joint having excellent brittle crack propagation resistance as set forth in claim 12 **characterized in that** said weld pass parts with the inferior fracture resistance are present in the number of 1/3 or less of the total number of passes required for forming the welded joint.

14. A multi-pass butt welded joint having excellent brittle crack propagation resistance as set forth in claim 12 or 13 **characterized in that** said weld pass parts with the inferior fracture resistance are present separated from each other in a plate thickness direction of the welded joint.

15. A multi-pass butt welded joint having excellent brittle crack propagation resistance as set forth in any one of claims 12 to 14 **characterized in that** each weld pass part with the inferior fracture resistance is present continuously in a longitudinal direction of the welded joint.

16. A multi-pass butt welded joint having excellent brittle crack propagation resistance as set forth in any one of claims 12 to 14 **characterized in that** each weld pass part with the inferior fracture resistance is present discontinuously in a longitudinal direction of the welded joint.

17. A multi-pass butt welded joint having excellent brittle crack propagation resistance as set forth in claim 16 **characterized in that** each weld pass part with the inferior fracture resistance has a length in the longitudinal direction of the welded joint of 100 mm to 400 mm.

18. A multi-pass butt welded joint having excellent brittle crack propagation resistance as set forth in claim 16 or 17 **characterized in that** each weld pass part with the inferior fracture resistance is present in the longitudinal direction of the welded joint discontinuously at intervals of 200 mm to 400 mem.

19. A multi-pass butt welded joint having excellent brittle crack propagation resistance as set forth in any one of claims 12 to 18 **characterized in that** each weld pass part with the inferior fracture resistance is formed by one or more passes.

20. A multi-pass butt welded joint having excellent brittle crack propagation resistance as set forth in any one of claims 12 to 19 **characterized in that** each weld pass part with the inferior fracture resistance comprises a weld layer formed by a welding material with an amount of Ni 1% or more smaller than the amount of Ni of the welding material forming other weld layers.

21. A multi-pass butt welded joint having excellent brittle crack propagation resistance as set forth in claim 20 **characterized in that** each weld pass part with the inferior fracture resistance comprises a weld layer formed by the same welding method as the welding method forming the other weld layers.

22. A malti-pass butt welded joint having excellent brittle crack propagation resistance as set forth in claim 20 or 21 **characterized in that** each other weld layer zone has a structure in which no martensite transformation has occurred.

23. A multi-pass butt welded joint having excellent brittle crack propagation resistance as set forth in any one of claims 12 to 22 **characterized in that** each weld pass part with the inferior fracture resistance is not tempered by heat of a succeeding weld pass part.

24. A multi-pass butt welded joint having excellent brittle crack propagation resistance as set forth in claim 1 **characterized in that** each weld pass part is expanded at the time of solidification and/or at the time of transformation and the residual stress distribution of the inside of the welded joint is made locally complex.

25. A multi-pass butt welded joint having excellent brittle crack propagation resistance as set forth in claim 24 **characterized in that** each expanded weld pass part is formed by a welding material transforming at a low temperature.

26. A multi-pass butt welded joint having excellent brittle crack propagation resistance as set forth in claim 25 **characterized in that** a temperature of said transformation is 400°C or less.

27. A multi-pass butt welded joint having excellent brittle crack propagation resistance as set forth in claim 25 or 26 **characterized in that** said transformation is a martensite transformation.

28. A multi-pass butt welded joint having excellent brittle crack propagation resistance as set forth in any one of claims 25 to 27 **characterized in that** said welding material has an amount of Ni 1 mass% or more larger than the amount of Ni of the welding material forming the other weld pass parts.

29. A multi-pass butt welded joint having excellent brittle crack propagation resistance as set forth in any one of claims 24 to 28 **characterized in that** said expanded weld pass parts are present in the number of 1/2 or less of the total number of passes required for forming the welded joint.

30. A multi-pass butt welded joint having excellent brittle crack propagation resistance as set forth in any one of claims 24 to 29 **characterized in that** said expanded weld pass parts are present separated from each other in the plate thickness direction of the welded joint.

31. A multi-pass butt welded joint having excellent brittle crack propagation resistance as set forth in any one of claims 24 to 30 **characterized in that** each expanded weld pass part is formed by one or more passes.

32. A multi-pass butt welded joint having excellent brittle crack propagation resistance as set forth in any one of claims 24 to 31 **characterized in that** each expanded weld pass part is present continuously in the longitudinal direction of the welded joint.

33. A multi-pass butt welded joint having excellent brittle crack propagation resistance as set forth in any one of claims 24 to 31 **characterized in that** each expanded weld pass part is present discontinuously in the longitudinal direction of the welded joint.

34. A multi-pass butt welded joint having excellent brittle crack propagation resistance as set forth in claim 33 **characterized in that** each expanded weld pass part has a length in the longitudinal direction of the welded joint of 100 mm or more.

35. A multi-pass butt welded joint having excellent brittle crack propagation resistance as set forth in claim 33 or 34 **characterized in that** each expanded weld pass part is present discontinuously at intervals of 400 mm or less in the longitudinal direction of the welded joint.

36. A multi-pass butt welded joint having excellent brittle crack propagation resistance as set forth in any one of claims 24 to 35 **characterized in that** each expanded weld pass part is not tempered by heat of a succeeding weld pass part.

37. A welded structure **characterized by** having a multi-pass butt welded joint having excellent brittle crack propagation resistance as set forth in any one of claims 1 to 36.
